# EUROPÄISCHE PATENTSCHRIFT

(11) **EP 1 857 249 B1**
(45) Veröffentlichungstag und Bekanntmachung des Hinweises auf die Patenterteilung: **10.02.2010**
(21) Anmeldenummer: 07009571.6
(22) Anmeldetag: 12.05.2007
(51) Int. Cl.: B29C 44/58

(54) **Vorrichtung zur Herstellung von Schaumformteilen**
Device for manufacturing moulded foam parts
Dispositif de fabrication de pièces en mousse moulées

(30) Priorität: 15.05.2006 DE 102006022546
(43) Veröffentlichungstag der Anmeldung: 21.11.2007
(73) Patentinhaber: FRIMO Group GmbH, 49504 Lotte (DE)
(72) Erfinder: Hilbers, Paul, 48465 Schüttorf (DE)
(74) Vertreter: HOFFMANN EITLE

(56) Entgegenhaltungen:
- DE-A1- 19 723 621
- DE-C1- 10 152 392
- DE-U1- 20 213 687
- GB-A- 1 283 972
- GB-A- 1 374 461

## Beschreibung

### Technisches Gebiet

Die Erfindung betrifft eine Vorrichtung zur Herstellung von Schaumformteilen gemäss dem Oberbegriff des Anspruchs 1.

### Stand der Technik

Eine solche Vorrichtung ist aus der DE 197 23 621 A1 bekannt. Die vertikal beabstandeten Kulissen sind dabei in hintereinander liegenden Ausnehmungen des Maschinenständers anordnet, die in allen Teilbereichen einen geradlinigen, vertikalen Verlauf haben.

Aus der DE 202 13 687 U1 ist ein Formteilautomat mit zwei Formhälften bekannt, bei dem die verfahrbare Formhälfte mit nur einem einzigen Antrieb eine Linearbewegung und eine Schwenkbewegung ausführen kann. Damit wird eine Automatisierung der zur Herstellung von Formteilen nötigen Prozessschritte angestrebt.

Aus der EP 0321 591 A1ist eine Vorrichtung bekannt, bei der der untere Werkzeugtisch in Richtung des oberen Werkzeugtisches anhebbar ist, um die während der bestimmungsgemäßen Verwendung auf den beiden Werkzeugtischen zum Zwecke der Herstellung von Schaumformteilen angeordneten Werkzeuge miteinander in Eingriff zu bringen. Dazu ist es allerdings erforderlich, in die geöffneten Werkzeuge zunächst Oberflächenbezugsstoffe und gegebenenfalls Stützelemente einzulegen, was recht umständlich ist. Außerdem ist die bekannte Vorrichtung sehr schwer gebaut und schwierig umzustellen.

### Darstellung der Erfindung

De Erfindung liegt die Aufgabe zu Grunde, eine solche Vorrichtung derart weiter zu entwickeln, dass sie bequemer zu bedienen und leichter um- und herzustellen ist.

Diese Aufgabe wird erfindungsgemäß bei einer Vorrichtung der eingangs genannten Art mit den kennzeichnenden Merkmalen von Anspruch 1 gelöst. Auf vorteilhafte Ausgestaltungen nehmen die Unteransprüche Bezug.

Die Kulissenführungen behindern die Zugänglichkeit des geöffneten Werkzeuges in keiner Weise. Dabei ist es von hervorzuhebender Bedeutung, dass sich der obere Werkzeugtisch durch die Verwendung eines Zentralantriebes stets an beiden Enden völlig synchron bewegt.

Die beiderseitigen Kulissenführungen sind durch jeweils zwei vertikal beabstandete Kulissen des oberen Werkzeugtisches gebildet, die durch sich parallel zueinander erstreckende Ausnehmungen, beispielsweise Nuten, oder Vorsprünge des Maschinenständers, beispielweise Rippen, geführt sind. Sie können selbst durch Gleitkörper einer an die Kulissenführungen angepassten Gestalt und Größe gebildet und gegebenenfalls durch Rollkörper darin bzw. auf abgestützt sein.

Der obere Werkzeugtisch ist auf einer Wegstrecke, die der Länge des unteren Endes der Kulissenführungen entspricht, vertikal verschiebbar. Das ist oft erforderlich, um die miteinander in Eingriff befindlichen Werkzeughälften im Anschluss an die Herstellung eines Schaumformteils voneinander abzuheben, ohne dass sich eine Beschädigung de Formteils ergibt. Im Anschluss daran schwenkt der obere Werkzeugtisch, der Kulissenführung folgend, zurück, was es erleichtert, das fertige Schaumformteil aus der unteren Werkzeughälfte zu entnehmen und gegebenenfalls beide Werkzeughälften neu mit den benötigten Einlegern zu bestücken. Hierzu ist es zweckmäßig, wenn bogenförmig zurückschwingende Abschnitt der Kulissenführung so bemessen ist, dass jeweils beide vertikal beabstandeten Kulissen zugleich darin einfahrbar sind.

Die Kulissen sind an möglichst langen, T - förmig nach unten vorstehenden Vorsprüngen des oberen Werkzeugtisches festgelegt, um eine möglichst gute Führung des oberen Werkzeugtisches in dem Maschinenständer zu erreichen. Demgemäss muss sich der bogenförmige Abschnitt der Kulissenführung um ein entsprechend großes Maß nach hinten erstrecken, so dass beide Kulissen zugleich darin einfahrbar sind.

Die bogenförmigen Abschnitte können parallel zu den gedachten Wegen verlaufen, auf denen sich die Enden der Schwenkhebel bewegen, an denen die Pleuelstangen festgelegt sind. Dadurch ist es möglich, den oberen Tisch bei einer entsprechend großen Länge der Kulissenführungen sogar in eine Überkopflage zu bewegen und besonders leicht beschickbar zu gestalten.

Die beiden Schwenkhebel können an Antriebsrädern festgelegt sein, die durch Antriebsketten oder Zahnriemen mit Abtriebsrädern des Zentralantriebs verbunden sind. Eine solche Konstruktion ist besonders einfach herzustellen, sehr robust und von geringem Gewicht.

Die Abtriebsräder können durch eine Koppelwelle des Zentralantriebs unverdrehbar verbunden sein. Hierdurch wird eine besonders synchrone Bewegung der beiden Enden des oberen Werkzeugtisches gewährleistet. Zweckmäßig ist die Koppelwelle an der Rückseite des Maschinenständers angeordnet, wo sie die Zugänglichkeit der Werkzeuge nicht beeinträchtigt.

Die Koppelwelle kann dabei durch zumindest einen Elektromotor verdrehbar sein.

Zweckmäßig sind zwei Elektromotoren, insbesondere elektrische Synchronmotoren, vorhanden und den Abtriebsrädern zugeordnet.

Um die Zugänglichkeit des geöffneten Werkzeuges noch weiter zu verbessern hat es sich als zweckmäßig erwiesen, wenn der Maschinenständer nach vorn schwenkbar gelagert ist.

### Kurzbeschreibung der Zeichnung

Die Erfindung wird nachfolgend anhand der in der Anlage beigefügten Zeichnung weiter verdeutlicht. Es zeigen:
Fig.1: Eine beispielhafte Vorrichtung in einer Ansicht schräg von vorn und mit abgesenktem Obertisch

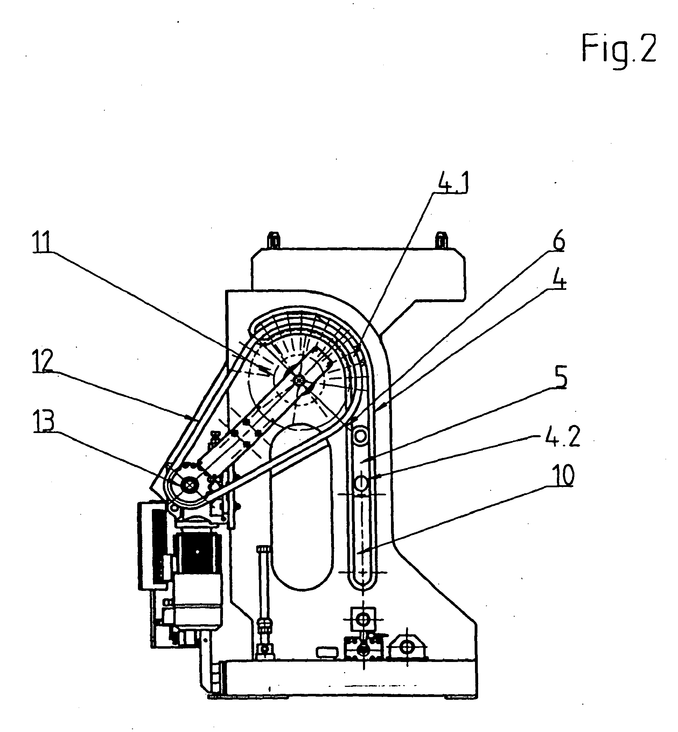

Fig. 2: Die Vorrichtung gemäß Fig.1 in einer Ansicht schräg von vorn und mit vertikal angehobenem Obertisch
Fig.3: Die Vorrichtung gemäß Fig. 1 in einer Ansicht schräg von vorn und mit ganz angehobenem und nach hinten abgekipptem Obertisch

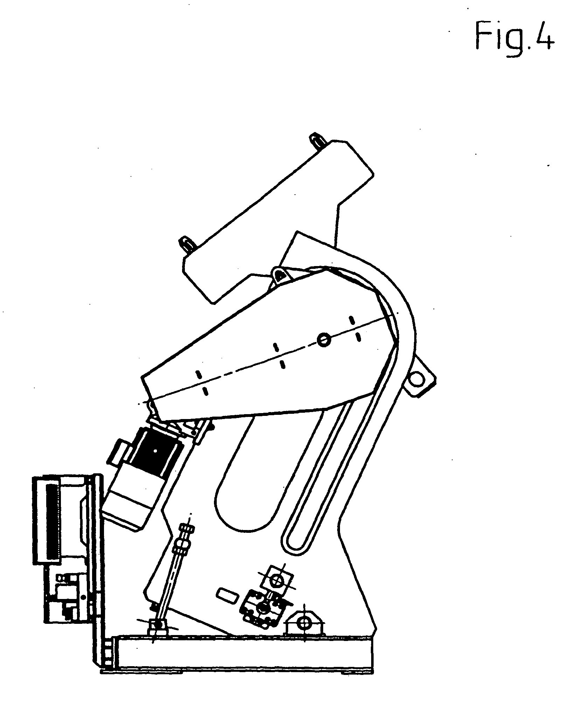

Fig. 4: Die Vorrichtung gemäß Fig. 1 in einer Ansicht schräg von vorn in nach vorn geschwenktem Zustand und mit nach hinten abgekipptem Obertisch
Fig. 5: Die Bedienungssituation der Vorrichtung bei dem in Fig.4 wiedergegebenen Zustand
Fig. 6: Die Vorrichtung gemäß Fig. 1 in einer Ansicht schräg von hinten und mit abgesenktem Obertisch
Fig. 7: Den Obertisch der Vorrichtung gemäß Fig. 1 in einer Ansicht von der Seite

### Ausführung der Erfindung

Die in der Zeichnung dargestellte Vorrichtung dient zur Herstellung von Schaumformteilen, die z.B. bei der Ausstattung des Innenraumes von Kraftfahrzeugen zur Anwendung gelangen. Sie umfasst einen Maschinenständer 1 und zwei darin übereinanderliegend angeordnete, abstandsveränderliche Werkzeugtische 2, 3. Der Maschinenständer besteht im wesentlichen aus zwei in Querrichtung verbundenen, ebenen Stahlplatten 1.1 die parallel zueinander angeordnet und nach vorn schwenkbar mit einem Untergestell 1.2 verbunden sind. Das Verbindungsgelenk 1.3 ist am vorderen Ende des Maschinenständers angebracht.

Der obere Werkzeugtisch 3 ist in zwei einander gegenüberliegenden Kulissenführungen 4 des Maschinenständers 1 verschiebbar geführt, durch Pleuelstangen 5 mit den Enden von Schwenkhebeln 6 eines Zentralantriebs 7 verbunden und durch die Schwenkhebel 6 in den Kulissenführungen 4 verschiebbar. Die Länge der Pleuelstangen 5 ist so bemessen und mit der Länge der Kulissenführungen 4 und der Schwenkhebel 6 abgestimmt, dass sich eine nahezu gestreckte Zuordnung der Schwenkhebel 6 zu den Pleuelstangen 5 ergibt, wenn sich der obere Werkzeugtisch 3 in der untersten Stellung befindet. Das untere Ende der Kulissenführungen 4 wird dabei nicht von der unteren Kulisse 4.2 berührt, mit der Folge, dass das von dem oberen Werkzeugtisch 3 getragene Oberwerkzeug fest und dicht an das von dem unteren Werkzeugtisch 2 getragene Unterwerkzeug angepresst wird. Wenn sich die Schwenkhebel 6 und die Pleuelstangen 5 dabei im Bereich einer geraden Linie befinden, deren gedachte Verlängerung zugleich die Mitte der Antriebsräder 11 durchschneidet, dann ist es häufig nicht erforderlich besondere Hilfseinrichtungen für die Zuhaltung des Werkzeugs vorzusehen.

Die beiderseitigen Kulissenführungen 4 sind durch jeweils zwei vertikal beabstandete Kulissen 4.1, 4.2 des oberen Werkzeugtisches 3 gebildet, die durch sich parallel zueinander erstreckende Ausnehmungen 8 des Maschinenständers 1 geführt. Die Ausnehmungen sind durch Durchbrechungen der Stahlplatten 1.1 gebildet. Sie können auch durch Nuten oder Rippen gebildet sein.

Die Kulissenführungen 4 sind nach Art eines umgekehrten J am oberen Ende 9 in den Stahlplatten 1.1. bogenförmig zurückschwingend ausgebildet und unter Vermeidung von sprunghaften Richtungsänderungen am unteren Ende 10 vertikal in Richtung des unteren Werkzeugtisches 2 verlaufend ausgebildet sind.

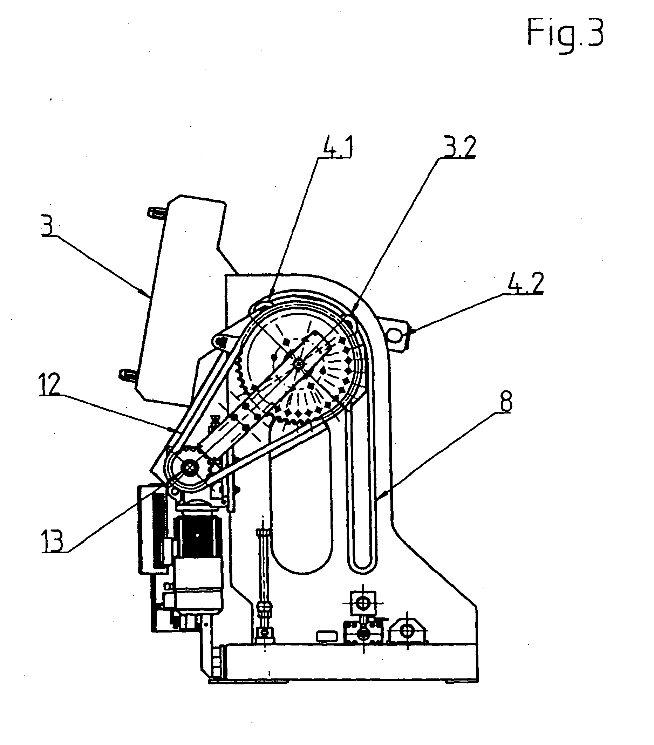

Der bogenförmig zurückschwingende Abschnitt der Kulissenführungen 4 ist so bemessen, dass jeweils beide vertikal beabstandeten Kulissen 4.1, 4.2 zugleich darin einfahrbar sind, um den oberen Werkzeugtisch in eine nach hinten abgekippte Position zu überführen, wie in Fig. 3 gezeigt. Die Unterseite des oberen Werkzeugtisches erfährt dadurch eine verbesserte Zugänglichkeit.

Die beiden Schwenkhebel 6 sind an Antriebsrädern 11 festgelegt, die durch Antriebsketten 12 oder Zahnriemen mit Abtriebsrädern 13 des Zentralantriebs 7 verbunden, wobei das Durchmesserverhältnis der Antriebsräder 11 und der Abtriebsräder 13 vier zu eins beträgt. Die daraus resultierende Übersetzung ermöglicht es, den oberen Werkzeugtisch 3 unter Verwendung üblicher Getriebemotoren 15 zügig und zugleich unter Vermeidung von störenden Schwingungen in die verschiedenen Positionen zu überführen.

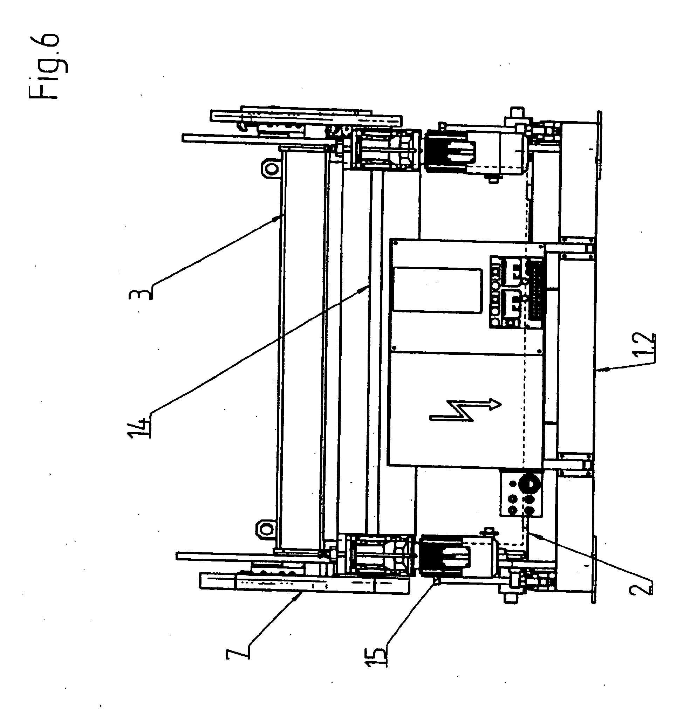

Die Abtriebsräder 11 sind durch eine Koppelwelle 14 des Zentralantriebs 7, Fig. 6, unverdrehbar verbunden. Dadurch ist sichergestellt, dass die beiden Enden des oberen Werkzeugtisches 3 völlig synchron und verkantungssicher in die verschiedenen Positionen überführt werden. Die Verwendung von elektrischen Synchronantrieben in den Getriebemotoren unterstreicht diesen Effekt und trägt dazu bei, die Kulissenführungen 4 zu entlasten.

Die Koppelwelle 14 ist an der Rückseite des Maschinenständers 1 angeordnet, Fig. 6, und dadurch bei der Bedienung der Vorrichtung nicht hinderlich.

Die Koppelwelle 14 ist grundsätzlich durch nur einen Elektromotor 15 verdrehbar. Bevorzugt gelangt jedoch eine Ausführung zur Anwendung, bei der zwei Getriebemotoren zur Anwendung gelangen, die an den Enden der Koppelwelle 14 angeordnet sind. Die Elektromotoren 15 sind zugleich mit den Antriebswellen der Abtriebsräder 13 verbunden.

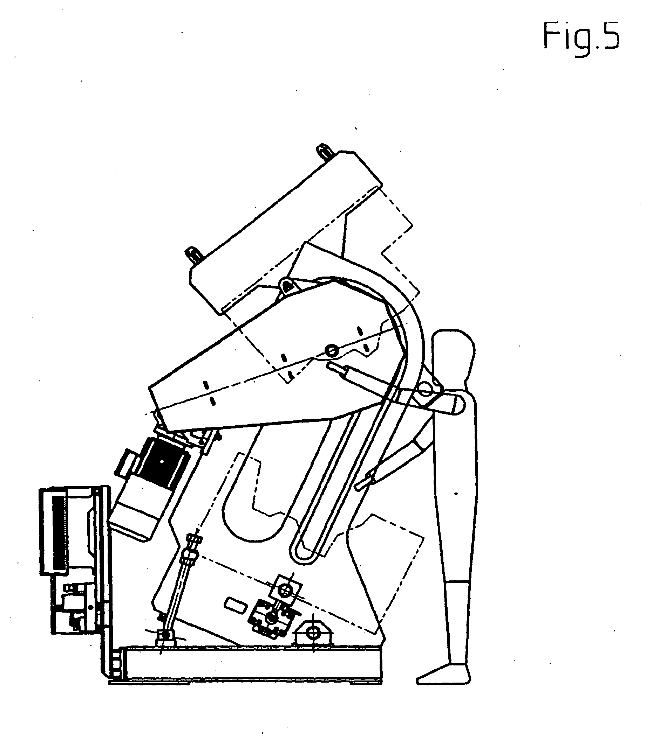

Durch die nach vorn schwenkbare Lagerung des Maschinenständers 1 ergibt sich die in Fig. 5 gezeigte, ergonomisch vorbildliche Zugänglichkeit der geöffneten Werkzeuge. Daher können von einer Bedienungsperson mehrere Vorrichtungen weitgehend ermüdungsfrei bedient werden.

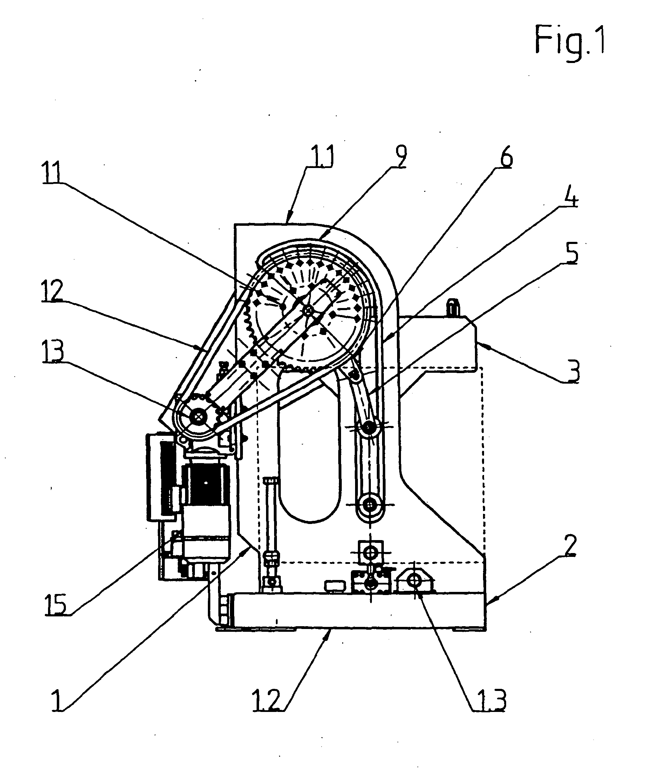

Während des eigentlichen Schäumprozesses befindet sich der Maschinenständer wieder in der vertikalen Position gemäß Fig. 1, was den Schäumprozess begünstigt und Verletzungen des Bedienungspersonals durch in den Arbeitsraum vorstehende Vorrichtungsbestandteile vorbeugt.

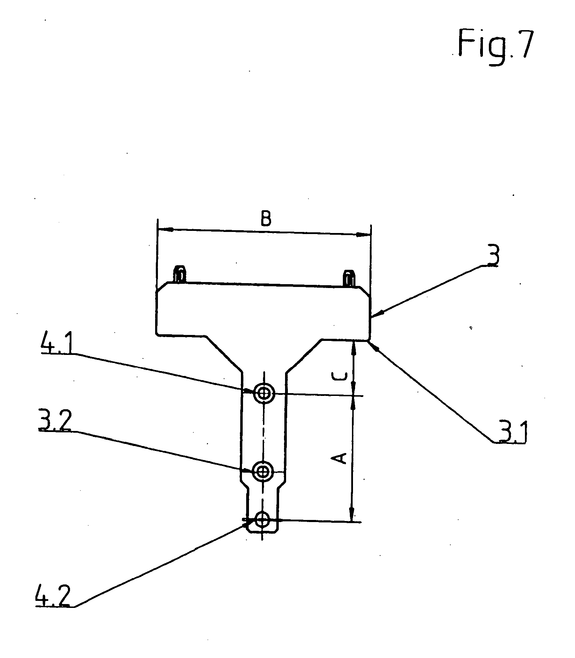

In Fig. 7 ist der obere Werkzeugtisch 3 in einer Ansicht von der Seite wiedergegeben. Er besteht aus einer Werkzeugaufnahme 3.1, an der das verwendete Oberwerkzeug festlegbar ist und zwei seitlich daran angebrachten, senkrecht vorstehenden Stützen 3.2, an denen die Kulissen 4.1. und 4.2 der Kulissenführung 5 festgelegt sind. Sie bestehen bei der gezeigten Ausführung aus Rollen und haben einen Abstand A von einander, der wenigstens 06 - mal, vorzugsweise 0,8 - mal, so groß ist wie die Tiefe B des Werkzeugtisches.

Dadurch wird eine gute Führung des oberen Werkzeugtisches 3 erreicht. Die Kulissenführung ist in dem nach hinten geschwungenen, oberen Abschnitt, so tief dimensioniert, dass die beiden Kulissen 4.1 und 4.2 gleichzeitig darin aufgenommen werden können, wie in Fig. 3 gezeigt. Der obere Werkzeugtisch 3 befindet sich dabei in der in Fig. 3 gezeigten, nach hinten abgekippten Lage.

Der Abstand C zwischen der oberen Kulisse 4.1 und der Werkzeugaufnahme beträgt 0,2 bis 0,8 des Abstandes A, um einen hinreichend großen Freiraum für die Beschickung des geöffneten Werkzeugs zu erhalten.

## Patentansprüche

1. Vorrichtung zur Herstellung von Schaumformteilen, umfassend einen Maschinenständer (1) und zwei darin übereinanderliegend angeordnete, abstandsveränderliche Werkzeugtische (2,3), wobei der obere Werkzeugtisch (3) in zwei einander gegenüberliegenden Kulissenführungen (4) des Maschinenständers (1) verschiebbar geführt, durch Pleuelstangen (5) mit den Enden von Schwenkhebeln (6) eines Zentralantriebs (7) verbunden und durch die Schwenkhebel (6) verschiebbar ist und
die beiderseitigen Kulissenführungen (4) durch jeweils zwei vertikal beabstandete Kulissen (4.1, 4.2) des oberen Werkzeugtisches (3) gebildet sind, die durch sich parallel zueinander erstreckende Ausnehmungen (8) oder Vorsprünge des Maschinenständers (1) geführt sind
**dadurch gekennzeichnet, dass** die Kulissen (4.1, 4.2) an T-förmig nach unten vorstehenden Vorsprüngen des oberen Werkzeugtisches (3) festgelegt sind, dass die Kulissenführungen (4) nach Art eines umgekehrten J am oberen Ende (9) bogenförmig zurückschwingend ausgebildet und unter Vermeidung von sprunghaften Richtungsänderungen am unteren Ende (10) vertikal in Richtung des unteren Werkzeugtisches (2) verlaufend ausgebildet sind und
dass der bogenförmig zurückschwingende Abschnitt so bemessen ist, dass jeweils beide vertikal beabstandeten Kulissen (4.1, 4.2) zugleich darin einfahrbar sind.

2. Vorrichtung nach Anspruch 1, **dadurch gekennzeichnet, dass** die beiden Schwenkhebel (6) an Antriebsrädern (11) festgelegt sind, die durch Antriebsketten (12) oder Zahnriemen mit Abtriebsrädern (13) des Zentralantriebs (7) verbunden sind.

3. Vorrichtung nach Anspruch 2, **dadurch gekennzeichnet, dass** die Antriebsrädern (11) durch eine Koppelwelle (14) des Zentralantriebs (7) unverdrehbar verbunden sind.

4. Vorrichtung nach Anspruch 3, **dadurch gekennzeichnet, dass** die Koppelwelle (14) an der Rückseite des Maschinenständers (1) angeordnet ist.

5. Vorrichtung nach Anspruch 3 oder 4, **dadurch gekennzeichnet, dass** die Koppelwelle (14) durch zumindest einen Elektromotor (15) verdrehbar ist.

6. Vorrichtung nach Anspruch 5, **dadurch gekennzeichnet, dass** zwei Elektromotoren (15) vorhanden und den Abtriebsrädern (13) zugeordnet sind.

7. Vorrichtung nach einem der Ansprüche 1 bis 6, **dadurch gekennzeichnet, dass** der Maschinenständer (1) nach vorn schwenkbar gelagert ist.

## Claims

1. Device for producing foam mouldings comprising a machine frame (1) and two mould tables (2, 3) arranged lying one above another therein and the distance of which can be altered, wherein the upper mould table (3) is guided to be displaceable in two connecting link guides (4) of the machine frame (1) which are opposite one another, is connected by connecting rods (5) to the ends of pivoting levers (6) of a central drive (7) and can be displaced by the pivoting levers (6) and the connecting link guides (4) on both sides are formed by in each case two vertically spaced connecting links (4.1,4.2) of the upper mould table (3), which are guided by recesses (8) or projections of the machine frame (1) extending parallel to one another, **characterised in that** the connecting links (4.1, 4.2) are fixed to projections of the upper mould table (3) projecting downwards in a T shape, **in that** the connecting link guides (4) are designed to be swinging back in curved manner like a type of inverted J at the upper end (9) and while avoiding sudden directional changes at the lower end (10) are designed to run vertically in the direction of the lower mould table (2) and **in that** the section swinging back in curved manner has dimensions so that in each case both vertically spaced connecting links (4.1, 4.2) can be moved therein at the same time.

2. Device according to claim 1, **characterised in that** the two pivoting levers (6) are fixed to drive wheels (11) which are connected to drive wheels (13) of the central drive (7) by drive chains (12) or toothed belts.

3. Device according to claim 2, **characterised in that** the drive wheels (11) are connected to be non-rotatable by a coupling shaft (14) of the central drive (7).

4. Device according to claim 3, **characterised in that** the coupling shaft (14) is arranged on the rear side of the machine frame (1).

5. Device according to claim 3 or 4, **characterised in that** the coupling shaft (14) can be rotated by at least one electromotor (15).

6. Device according to claim 5, **characterised in that** two electromotors (15) are present and assigned to the drive wheels (13).

7. Device according to one of claims 1 to 6, **characterised in that** the machine frame (1) is mounted to be pivotable towards the front.

## Revendications

1. Dispositif de fabrication de pièces en mousse moulées, comprenant un support machine (1) et deux tables à outil (2, 3) à espacement variable, y étant disposées l'une au-dessus de l'autre, la table à outil supérieure (3) étant guidée de manière déplaçable dans deux guidages à coulisse (4) opposés du support machine (1), en étant reliée, par des bielles (5), aux extrémités de leviers pivotants (6) d'un entraînement central (7) et en étant déplaçable au moyen des leviers pivotants (6), et
les guidages à coulisse (4) situés de part et d'autre sont formés par chaque fois deux coulisses (4.1, 4.2), espacées verticalement, de la table à outil supérieure (3), guidées par des évidements (8), s'étendant parallèlement les uns aux autres, ou des saillie du support machine (1),
**caractérisé en ce que** les coulisses (4.1, 4.2) sont fixées sur des saillies, se projetant vers le bas en forme de T, de la table à outil supérieure (3), **en ce que** les guidages à coulisse (4) sont réalisés en forme d'arc revenant, à la manière d'un J inversé, sur l'extrémité supérieure (9) et, en évitant des changements de direction brusques, sont réalisés, à l'extrémité inférieure (10), en s'étendant verticalement en direction de la table à outil inférieure (2), et
**en ce que** le tronçon en forme d'arc revenant est dimensionné de manière que chaque fois les deux coulisses (4.1, 4.2), espacées verticalement, soient susceptibles d'y être introduites en même temps.

2. Dispositif selon la revendication 1, **caractérisé en ce que** les deux leviers pivotants (6) sont fixés sur des roues menantes (11), reliées, par des chaînes d'entraînement (12) ou des courroies crantées, 1 à des roues menées (13) de l'entraînement central (7).

3. Dispositif selon la revendication 2, **caractérisé en ce que** les roues menantes (11) sont reliées, sans possibilité de rotation, au moyen d'un arbre de couplage (14) de l'entraînement central (7).

4. Dispositif selon la revendication 3, **caractérisé en ce que** l'arbre de couplage (14) est disposé sur le côté arrière du support machine (1).

5. Dispositif selon la revendication 3 ou 4, **caractérisé en ce que** l'arbre de couplage (14) est susceptible de tourner au moyen d'au moins un moteur électrique (15).

6. Dispositif selon la revendication 5, **caractérisé en ce que** sont prévus deux moteurs électriques (15), associés aux roues menées (13).

7. Dispositif selon l'une des revendications 1 à 6, **caractérisé en ce que** le support machine (1) est monté de manière à pouvoir pivoter vers l'avant.
